# FASCICULE DE BREVET EUROPEEN

(11) **EP 2 847 028 B1**
(45) Date de publication et mention de la délivrance du brevet: **13.07.2016**
(21) Numéro de dépôt: 13727270.4
(22) Date de dépôt: 06.05.2013
(51) Int. Cl.: B60M 1/28

(54) **SYSTÈME ET PROCÉDÉ DE MESURE DE LA POSITION DU FIL DE CONTACT D'UNE CATÉNAIRE PAR RAPPORT À UNE VOIE FERRÉE**
SYSTEM UND VERFAHREN ZUR MESSUNG DER POSITION DES KONTAKTDRAHTES EINER OVERHEAD-STROMLEITUNG IM VERHÄLTNIS ZU EINEM GLEIS
SYSTEM AND METHOD FOR MEASURING THE POSITION OF THE CONTACT WIRE OF AN OVERHEAD POWER LINE RELATIVE TO A RAILWAY TRACK

(30) Priorité: 11.05.2012 FR 1254318
(43) Date de publication de la demande: 18.03.2015
(73) Titulaire: Briand, Edmond, 13600 La Ciotat (FR); ROV Developpement, 13704 La Ciotat Cedex (FR)
(72) Inventeur: BRIAND, Edmond, F-13600 La Ciotat (FR)
(74) Mandataire: Novagraaf Technologies
(86) Numéro de dépôt international: PCT/FR2013/051014
(87) Numéro de publication internationale: WO 2013/167840

(56) Documents cités:
- EP-A1- 1 724 397
- EP-A1- 1 787 854
- EP-A2- 0 511 191
- DE-A1- 2 547 081
- DE-A1- 4 404 440
- JP-A- 2007 240 298

## Description

La présente invention a pour objet un système et un procédé de mesure de la position du fil de contact d'une caténaire d'alimentation électrique par rapport à une voie ferrée comportant des rails situés sous la dite caténaire.

JP 2007 240298 divulgue un système de mesure de la position du fil de contact d'une caténaire d'alimentation électrique par rapport à une voie ferrée, comportant un premier moyen de mesure intégrant un télémètre vertical apte à mesurer la hauteur du fil de contact par rapport aux rails de la voie ferrée; des seconds moyens de mesure aptes à permettre la mesure du désaxement du fil de contact par rapport au plan médian vertical desdits rails; un inclinomètre solidaire du télémètre laser qui est monté sur un pivot d'inclinaison latéral et apte à mesurer l'angle du faisceau de celui-ci quand il vise le fil de contact; l'ensemble de ces moyens de mesure étant disposé sur un support posé sur les rails;

Une méthode connue pour fournir le courant aux trains à moteurs électriques est au moyen d'un système de caténaire aérien suspendu au-dessus de la voie entre des poteaux de soutien ou des portiques ou d'autres structures porteuses espacées le long de la voie. Un système caténaire type, désigné ci-après simplement sous le nom d'une caténaire, comporte un fil de contact suspendu à des éléments de suspension d'un câble support, lesquels éléments ou armement de suspension, constitué de consoles et de bras de liaisons, sont fixés aux poteaux de soutien. Le fil de contact est maintenu à un potentiel électrique élevé et fournit le courant électrique pour alimenter le train. Pour cela celui-ci a une structure télescopique, appelée pantographe, de collecte électrique montée sur son toit. Le pantographe comporte transversalement à la direction de la voie une surface de contact qui s'appuie sur le fil de contact de la caténaire d'une manière essentiellement continue pendant que le train voyage le long de la voie.

Le câble support forme une courbe dans le plan vertical, qui se rapproche d'une portion de parabole, entre les poteaux de soutien sous la traction de la pesanteur, mais le fil de contact est maintenu parallèle à la voie en variant la longueur des suspendes qui soutiennent et relient le fil de contact suspendu au câble support.

La position de la caténaire au-dessus de la voie doit être soigneusement contrôlée et maintenue dans une position prédéterminée pour assurer le contact continu entre le pantographe et le fil de contact pour garantir, sans interruption incontrôlée, l'alimentation du courant électrique au train. Non seulement il doit y avoir pour cela un contact continu, mais le point de contact sur le pantographe doit se déplacer et varier en permanence sur la longueur de la surface transversale du pantographe pendant que le train se déplace le long de la voie pour éviter, si ce n'était pas le cas, une usure de friction excessive sur une partie seulement du pantographe. Ainsi les positions verticales et horizontales du fil de contact relativement au pantographe sont importantes pour le fonctionnement efficace du train.

La commande de la position verticale du pantographe permet de maintenir la pression appropriée de contact mais :
- si le fil est trop bas, cette pression de contact peut devenir trop importante et générer un effort de friction excessif entre le fil et le pantographe ; le fil de contact risque également dans ce cas d'accrocher une pièce du train sous le pantographe, pouvant entrainer la chute de la caténaire, et donc d'électrocuter les passagers ou les spectateurs,
- et si le fil de contact est trop haut, le pantographe peut perdre le contact et, privant le train de son alimentation électrique, arrêter celui-ci intempestivement en plein voie,
- et si le contact est intermittent le train sera sujet à des montées et des baisses subites de puissance, générant un inconfort de voyage et pouvant endommager les équipements du train.

La position horizontale de la caténaire relativement au pantographe doit être également contrôlée et maintenue pour éviter que le fil de contact puisse être d'une part positionné, latéralement à gauche ou à droite, au-delà de la longueur du pantographe et d'autre part, comme indiqué précédemment, en contact permanent avec un seul point du pantographe, car si c'était le cas le pantographe serait rapidement scié en deux en raison de son frottement continu en ce point avec le fil de contact. Pour éviter ce problème il a été défini de positionner la caténaire au-dessus de la voie suivant un tracé, dans le plan horizontal, en zigzag par rapport au plan médian de la voie. Le point de contact entre le fil et le pantographe varie ainsi en continu sur la longueur du pantographe pendant que le train circule sur la voie, et l'ensemble de la surface de contact du pantographe est soumise à la même usure. Le tracé en zigzag doit être bien sûr soigneusement défini et contrôlé pour s'assurer également que le fil de contact reste latéralement dans les limites de la longueur du pantographe.

Le maintien de la position verticale et horizontale de la caténaire relativement au pantographe suivant des paramètres bien définis, afin de respecter les conditions ci-dessus exposées, exige donc de mesurer et de contrôler ces paramètres de position de la caténaire par rapport à des points de référence en de nombreux endroits prédéterminés le long de la voie, non seulement lors de l'installation mais aussi ensuite régulièrement pendant l'exploitation. Par convention, il est souvent pris comme point de référence le milieu de la voie, soit à l'intersection du plan médian passant par l'axe central de celle-ci et du plan tangent à la courbe supérieure de la section des rails, dit encore plan de la voie, à chaque endroit prédéterminé le long de la voie où des mesures doivent être prises : ces mesures sont donc au moins la hauteur et le désaxement du fil de contact.

La hauteur dans ce contexte se rapporte ainsi à la distance perpendiculaire entre un plan parallèle au plan de la voie et passant par le point de référence ci-dessus et le fil de contact de la caténaire à l'endroit prédéterminé le long de la voie. Ainsi, pour une voie horizontale, la hauteur sera simplement la distance verticale entre le point de référence et le fil de contact mais si la voie est en devers, comme dans les courbes, la hauteur ne sera pas la distance verticale mais sera mesurée sous un angle correspondant à l'angle de devers. La hauteur doit ainsi toujours être mesurée perpendiculairement au plan de la voie indépendamment de l'angle que fait la voie avec l'horizontale.

Le désaxement, dans le cadre de cette invention, se rapporte à l'excentration latérale de la caténaire par rapport à l'axe central de la voie mesuré perpendiculairement à la hauteur. Par exemple, sur une voie horizontale, le désaxement est la distance horizontale du fil de contact par rapport au plan médian vertical passant par l'axe central de voie. La hauteur et le désaxement se mesurent toujours suivant deux directions perpendiculaires, et un triangle rectangle est constitué par la hauteur, le désaxement et la distance, dite de visée, entre le point de référence et le fil de contact. La hauteur et le désaxement sont ainsi liées à cette distance de visée de façon analogue aux cotés d'un triangle rectangle par rapport à la hypoténuse par les fonctions trigonométriques de cosinus et de sinus respectivement de l'angle que fait l'hypoténuse, soit la distance de visée avec le coté correspondant à la hauteur : ces considérations géométriques permettent ainsi de calculer un des cotés et donc une valeur de mesure recherchée quand on connait l'hypoténuse et un des angles adjacent à celle-ci.

En dépit de l'importance de ces mesures de la hauteur et du désaxement du fil de contact pour la maintenance de la caténaire et de l'efficacité des trains à propulsion électrique, il n'existe en fait à ce jour aucun matériel ou procédé efficace, commode, fiable et précis pour faire de telles mesures. Deux types de procédés ou méthodes pour effectuer de telles mesures existent en fait à ce jour.

Une première méthode consiste à mesurer la hauteur et le désaxement à un endroit prédéterminé le long d'une voie de chemin de fer avec des moyens mis en oeuvre manuellement avec une perche isolée électriquement et un système de miroir et d'index pour la mesure du désaxement par alignement d'images. Pour mesurer la hauteur du fil de contact, la perche est tenue verticalement par un opérateur se tenant sous la caténaire et est déployée vers le haut, en maintenant sa partie inférieure sur un règle posée sur les rails, jusqu'à ce que sa partie supérieure entre en contact avec le fil de contact ; la perche étant graduée, la distance au fil de contact est mesurée en lisant les graduations correspondantes.

Sans développer ici le procédé de mesures du désaxement par un système de miroir et d'index, plusieurs inconvénients de ces procédés et moyens manuels apparaissent immédiatement telles que :
- la sécurité des personnes quand on manipule des perches rentrant en contact avec des fils transportant en général du courant de 13.000 volts ; de telles mesures ne peuvent donc pas être faites sous la pluie ou la neige à cause du risque d'électrocution des opérateurs.
- la mesure de la hauteur peut être limitée par la longueur des perches et un fort vent peut empêcher la prise de mesure.
- deux opérateurs sont requis, un pour tenir et manipuler le matériel, l'autre pour prendre et enregistrer les mesures.
- toute méthode manuelle est sujette ainsi à l'erreur humaine. Les données recueillies doivent plus tard être calculées à la main ou saisies dans un ordinateur, ce qui génère un autre risque d'erreur humaine. Et dans la mesure de désaxement avec un système de miroir et d'index, il peut être difficile de discerner quel fil est mesuré s'il y a plusieurs fils au dessus de la voie et il peut y avoir une erreur en alignant dans le miroir l'image d'un autre fil, que celui-ci voulu, avec l'index.
- ces procédés manuels de mesures ne permettent pas non plus de prendre d'autres mesures de la voie et de la caténaire, comme l'angle de devers ou l'écartement des voies, alors que ceux-ci sont utiles à connaitre pour calculer d'une façon précise la hauteur et le désaxement du fil de contact : ce dernier doit en effet être mesuré ou calculée par rapport à l'axe central de la voie, dont la position dépend de l'écartement des rails, et la hauteur doit être mesurée ou calculée dans un plan perpendiculaire au plan de la voie, nécessitant de bien connaitre le devers de celle-ci.

Ainsi, depuis plusieurs années, il a été développé un deuxième type de méthodes utilisant des moyens de mesure de type radar ou plus récemment laser, disposés sur des supports posés sur les rails ou montés sur des chariots mobiles sur la voie et dont certains ont pu faire l'objet de dépôts de demandes de brevets : on peut citer par exemple l'appareil et le procédé décrits dans le brevet US 5930904 de M. Charles Mualem déposé le 17 juin 1997 et qui enseigne un appareil comprenant un télémètre pour mesurer la hauteur de la caténaire, lequel télémètre est monté soit sur une règle horizontale graduée (le télémètre étant toujours dirigé vers le haut perpendiculairement à cette règle), soit sur un rapporteur angulaire, permettant de mesurer alors le désaxement du fil de contact par une mesure visuelle du déplacement du capteur manuellement soit par translation soit par rotation, ce qui ne permet pas d'obtenir une bonne précision ; ce système et procédé peuvent-donc être sujets à des erreurs et n'offrant pas la possibilité de mesurer le dévers et/ou l'écartement des voies comportent en plus les imprécisions dénoncées à ce sujet avec les systèmes manuels.

Une autre demande de brevet ES 2367067 déposée par la société Telice Telefonos le 10 novembre 2008 décrit un dispositif pour mesurer notamment la hauteur et le désaxement du fil de contact par rapport au point médian de la surface du roulage mais également l'écartement des rails, grâce à un sous système de mouvement horizontal constitué d'un coulisseau installé perpendiculairement à la voie et muni d'un moyen de détection de la face interne de chaque rail, et un moyen de mesure de la distance parcourue par le coulisseau, lequel coulisseau comporte également un dispositif équipé d'un émetteur de rayon laser pour positionner la caténaire et un système de mesures verticales pour calculer la distance entre la caténaire et la voie : ce dispositif est le plus abouti des équipements connus à ce jour mais d'une part sa conception nécessite une largeur plus importante que celle du gabarit des engins roulant normalement sur la voie et d'autre part sa mise en oeuvre ne garantit pas une bonne précision de l'ensemble de mesures, celles-ci n'incluant pas non plus la mesure du dévers ; de plus peu d'informations sont données concernant le calcul de la mesure de la hauteur et du désaxement, alors que comme déjà démontré, celui-ci dépend entre autres du devers pourtant non mesuré et la variation de l'écartement des rails peut modifier la référence de l'axe central de la voie, par rapport auquel le désaxement doit être mesuré.

Le problème posé est donc de disposer d'un système de mesure et d'un procédé de mise en oeuvre qui permette :
- d'une part une rapidité de mesures et une très grande précision,
- d'autre part les mesures à la fois de la hauteur et du désaxement mais également du dévers de la voie qui est une donnée essentielle pour vérifier la bonne position de la caténaire par rapport à l'axe de celle-ci, et, en plus et de préférence, de l'écartement des rails qui, outre qu'il s'agit d'une donnée utile en elle-même, permet d'améliorer encore la mesure du désaxement et obtenir la meilleure précision,
- sans avoir les inconvénients des dispositifs actuels, tels que des pièces mécaniques en mouvement de translation et/ou extérieures au gabarit normal de la voie, pas d'interruption de l'alimentation électrique de la caténaire, des risques d'erreurs de calculs et/ou un manque de données pour obtenir des résultats de mesure les plus précises
- et une installation très rapide, peu ou pas de maintenance, apte à être fixé sur un engin roulant ou sur une règle posée sur la voie, nécessitant la présence que d'un seul opérateur et celui-ci n'intervenant pas directement lors de la prise de mesures mais uniquement dans la préparation et le positionnement des capteurs pour éviter en particulier au maximum les risques d'erreurs humaines et augmenter la précision et la rapidité des mesures.

Une solution au problème posé est un système de mesure de la position du fil de contact d'une caténaire d'alimentation électrique par rapport à une voie ferrée comportant d'une manière connue un premier moyen de mesures intégrant un télémètre vertical apte à mesurer la hauteur du fil de contact par rapport aux rails de la voie ferrée et des seconds moyens de mesures aptes à permettre la mesure du désaxement du fil de contact par rapport au plan médian vertical desdits rails, l'ensemble de ces moyens de mesure étant disposés sur un support posé sur les rails; selon l'invention le système comporte en outre au moins un premier inclinomètre permettant de mesurer l'inclinaison du support du système par rapport à l'horizontale et une caméra pointée vers le haut dans la même direction que l'axe vertical de la voie et apte à capter l'image du fil de contact et les seconds moyens de mesures comportent un deuxième inclinomètre solidaire du télémètre laser, monté sur un pivot d'inclinaison latérale motorisé, et apte à mesurer l'angle du faisceau de celui-ci par rapport à la verticale quand il vise le fil de contact.

Une autre solution au problème posé est un procédé de mesure de la position du fil de contact, d'une caténaire d'alimentation électrique, par rapport à une voie ferrée comportant deux rails situés sous la dite caténaire et tel que :
- on affiche l'image fournie par une caméra pointée vers le haut depuis une plateforme support disposée sur la voie et dans la même direction que l'axe médian vertical de celle- ci, sur un écran et on clique sur le fil de contact visualisé à l'écran,
- on déplace la visée d'un télémètre laser vertical, disposé dans le plan médian de la même plateforme, par rotation motorisée de celui-ci autour d'un pivot support, dans un plan perpendiculaire au dit plan médian, vers et jusqu'à la position du point correspondant que l'on a cliqué sur l'écran,
- on mesure la distance du fil de contact avec le dit télémètre, et on calcule l'angle de celui-ci avec la verticale par soustraction des valeurs relevées par un premier inclinomètre de mesure de l'horizontalité et un deuxième inclinomètre de mesure de la rotation du télémètre,
- on en déduit la hauteur du fil par rapport au plan de la voie, le désaxement du fil de contact par rapport au plan médian vertical de celle-ci et son angle de dévers par rapport à l'horizontale.

Dans un mode préférentiel de réalisation l'ensemble des moyens de mesures du système suivant l'invention sont intégrés dans une station de mesure dont le boîtier est fixé à un support apte à être posé sur le dessus des rails et calé sur un de ses côtés contre l'intérieur d'un de ces rails, l'autre côté étant librement posé sur l'autre rail, et comportant une mire amovible destinée à venir en contact verticalement contre l'intérieur de cet autre rail, lequel système comportant au moins un deuxième télémètre a visée latérale vers cette mire.

Dans un autre mode de réalisation, l'ensemble des moyens de mesures du système suivant l'invention sont intégrés dans une station de mesure dont le boîtier est fixé à un support mobile muni de roues aptes à se déplacer sur les rails, lequel système comportant au moins deux télémètres à visée latérale chacune vers un rail.

Le résultat est un nouveau système et procédé de mesures de la position du fil de contact d'une caténaire par rapport à la voie ferrée qu'elle alimente électriquement, ainsi que du dévers et de l'écartement des rails de celle-ci qui permettent de plus une meilleure mesure de la dite position du fil de contact; lequel système et procédé n'ont pas les inconvénients des systèmes et procédés actuels décrits précédemment et répondent à l'ensemble des objectifs du problème posé ; en effet il n'y a aucune pièce mécanique en mouvement de translation et/ou extérieure au gabarit normal de la voie ; les mesures se font sans interruption de l'alimentation électrique de la caténaire ; l'installation du système est très rapide et celui-ci ne nécessite peu ou pas de maintenance ; l'ensemble du système est apte à être monté sur une règle posée sur la voie mais aussi sur un engin roulant et à permettre des mesures rapides en quasi continues le long de la voie ; il ne nécessite qu'un seul opérateur et celui-ci n'intervient pas directement lors de la prise de mesures mais uniquement dans la préparation du matériel et le positionnement des capteurs tel que de cliquer sur l'image du fil de contact dans le champ de vision de la caméra pour positionner ensuite automatiquement la visée du télémètre laser sur ce fil, et encore ce clic pourrait être réalisé par une analyse d'image qui l'identifierait sans intervention de l'opérateur, ainsi l'erreur humaine est quasi écartée; il n'y a pas de consignation et l'ensemble des mesures sont prises automatiquement rapidement tels qu'en dix secondes puis sont traités par un microprocesseur qui par des calculs connus donnent tous les résultats de distances et d'angles voulus tels que la hauteur du fil de contact et son désaxement suivant les définitions données en introduction, l'angle de devers de la voie et la distance entre les rails, toutes ces mesures et données étant stockées dans une mémoire et affichables suivant tout mode de représentation souhaité sur l'écran de tout ordinateur.

Les avantages évoqués ci-dessus de ce nouveau système et procédé de mesures en montrent l'intérêt, et la description ci-après et les figures jointes en donnent deux exemples de réalisation. D'autres modes de réalisation sont cependant possibles dans le cadre de la portée de la présente invention.

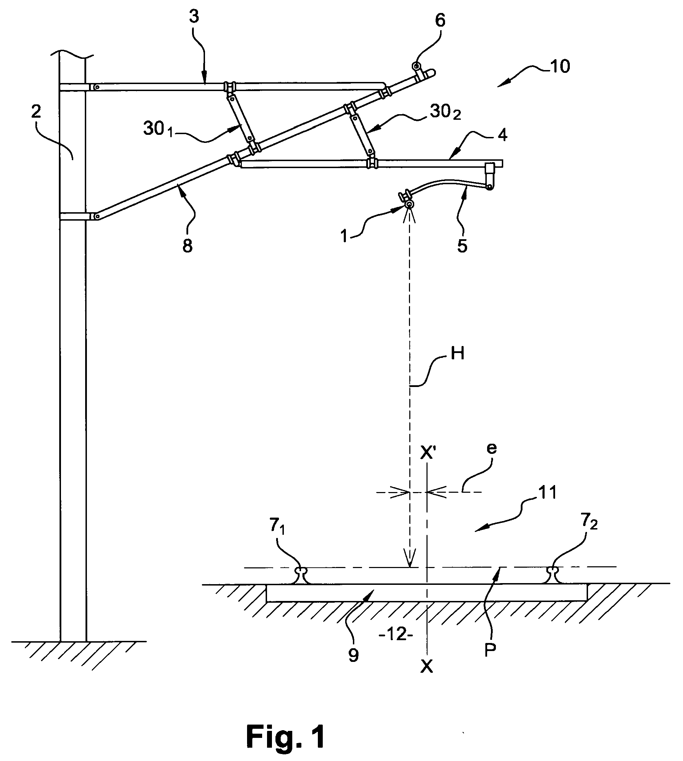

La figure 1 est un schéma en coupe d'une voie ferrée 11 type, perpendiculairement à la direction de celle-ci et au plan médian XX' des rails 7 qui la composent, représentés ici suivant un plan de voie horizontal P et qui sont supportés par des traverses 9 et un ballast 12, laquelle voie 11 est surmontée d'un ensemble caténaire 10 fixé sur un poteau support latéral 2 et représenté ici suivant un exemple type de réalisation.

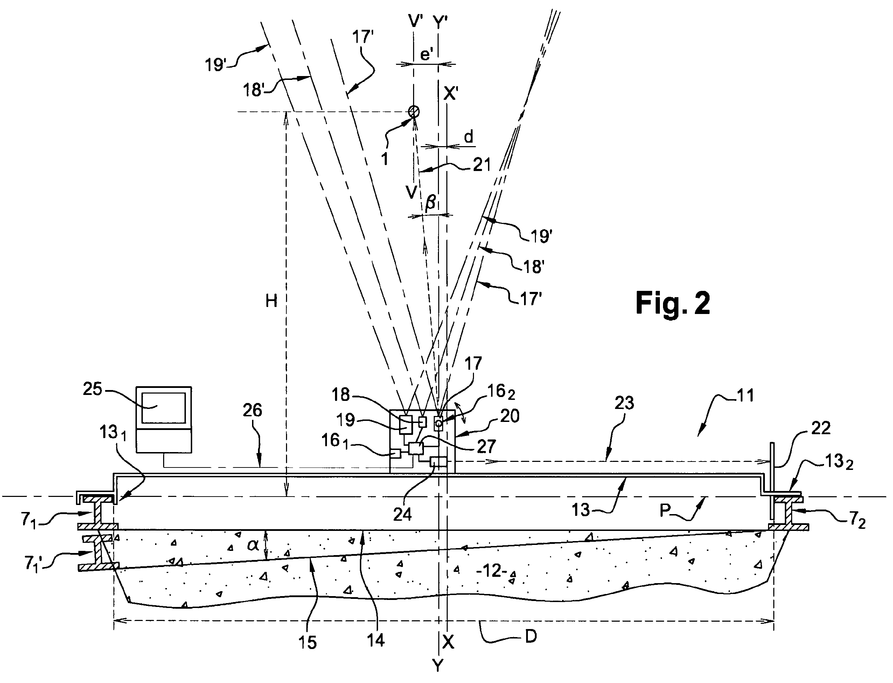

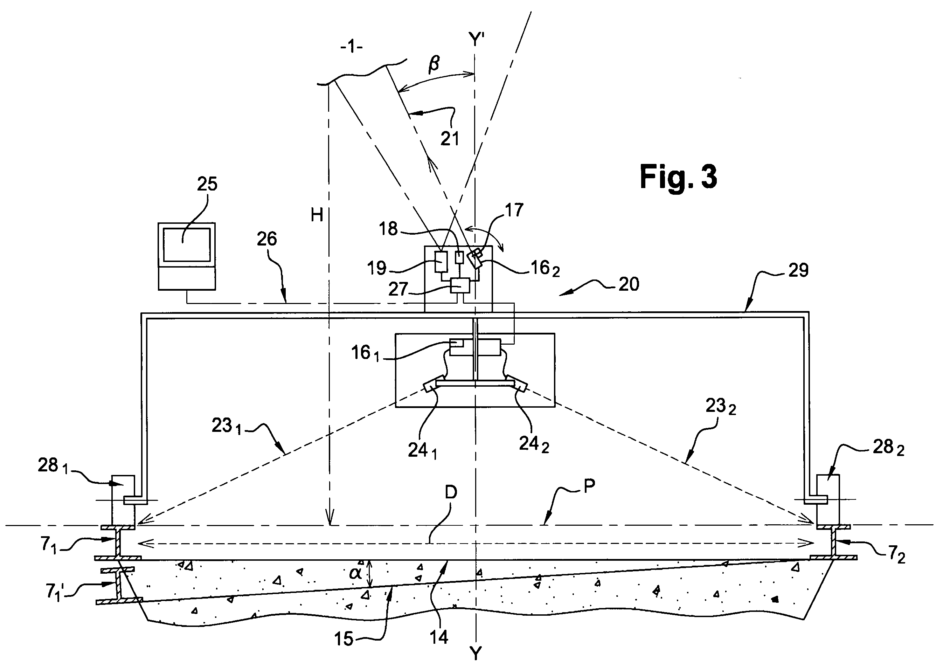

L'armement de cette caténaire 10 comprend une console 8 formant bras principal, un deuxième bras 3 formant hauban soutenant le bras 8, et un troisième bras 4 formant anti-balançant et relié à la console 8 de manière réglable , ces trois bras pouvant être reliés deux à deux par des entretoises 30₁, 30₂; cet anti-balançant 4 est terminé par un bras de rappel 5 lié et supportant le fil de contact 1, alors que le bras principal formant console 8 supporte le câble support 6, relié au fil de contact 1 entre deux poteaux 2 par des suspendes non représentées ici, et telles que déjà décrites en introduction, pour maintenir le fils de contact 1 parallèle à la voie. Ces éléments de suspension constituant l'armement de la caténaire, et la caténaire elle-même, ne sont pas représentés sur les figures 2 et 3 alors qu'ils sont bien entendus présents au-dessus de la voie ferrée considérée.

La figure 2 est un schéma partiel en coupe d'une voie ferrée, perpendiculairement à sa direction, sur laquelle est posé un premier exemple de réalisation d'un système de mesures suivant la présente invention.

La figure 3 est un schéma partiel également en coupe d'une voie ferrée, perpendiculairement à sa direction, sur laquelle est posé un deuxième exemple de réalisation d'un système de mesures suivant la présente invention monté sur une plateforme mobile.

Les système de mesures, tels que schématiquement représentés sur ces figures, de la position du fil de contact 1 d'une caténaire d'alimentation électrique par rapport à une voie ferrée 11, comportent comme cela est déjà enseigné dans les équipements connus à ce jour, un premier moyen de mesures intégrant un télémètre vertical 17 apte à mesurer la hauteur H du fil 1 de contact par rapport aux rails 7 de la voie ferrée et des seconds moyens de mesures aptes à permettre la mesure du désaxement « e » du fil de contact par rapport au plan médian XX' vertical desdits rails, l'ensemble de ces moyens de mesure étant disposés sur un support 13,29 posé sur les rails 7.

Le système comporte en outre suivant l'invention au moins un premier inclinomètre 16₁ permettant de mesurer l'inclinaison « α » du support 13,29 du système par rapport à l'horizontale 14 et donc de donner directement cet angle qui est celui du devers 15 de la voie 11, telle que représentée avec un rail 7₁' situé en dessous du rail 7₁ d'une voie sans dévers dont le plan P est horizontal.

Une caméra 19 est pointée vers le haut dans la même direction que l'axe XX' de la voie et est apte à capter dans son champ de vision 19' l'image du fil de contact 1 ; et les seconds moyens de mesures comportent un deuxième inclinomètre 16₂ solidaire du télémètre laser 17, monté sur un pivot motorisé d'inclinaison latérale dans un plan perpendiculaire au dit plan médian XX', et apte à mesurer l'angle « β » du faisceau 21 de celui-ci par rapport à la verticale quand le support est horizontal et quand il vise le fil 1 de contact grâce justement à l'image captée par la caméra : celle-ci permet à l'opérateur de piloter automatiquement cette visée en cliquant simplement sur l'image du fil affichée sur un écran 25 par exemple d'un ordinateur portable relié à la station de mesure 20, dans laquelle sont intégrés l'ensemble des moyens de mesures du système suivant l'invention. Pour cela les limites 17' de balayage du faisceau laser 21 sont situées à l'intérieur du champ de vision 19' de la camera au moins jusqu'à la hauteur maximale théorique du câble de contact 1 à mesurer.

Connaissant alors les dimensions exactes de la station 20, de son support 13, 29 et de l'emplacement du télémètre 17 par rapport au plan P, la distance du fil de contact 1, l'angle d'inclinaison « β » du télémètre 17 et celui du dévers « α » de la voie 11, le système peut calculer et, cela automatiquement par un logiciel simple que peut écrire l'homme du métier et enregistré dans un microprocesseur 27 du système ou d'un ordinateur extérieur 25, la hauteur « H » du fil de contact 1 et cela exactement suivant la définition donnée en introduction.

Pour obtenir une meilleure image prise par la caméra 19, le système comporte, sur le boitier de la station de mesure 20 un éclairage 18 orienté vers le haut et dont le cône de lumière 18' couvre la plus grande partie du champ de vision 19' de la caméra 19.

Suivant le mode de réalisation représenté sur la figure 2, le boîtier 20 de cette station de mesure est fixé à, soit ici au dessus, d'un support 13, tel qu'une règle, apte à être posé sur le dessus des rails 7 et calé par une butée 13₁ sur un de ses côtés, soit ici à gauche de la figure, contre l'intérieur d'un de ces rails 7₁ ; l'autre côté 13₂ de ce support 13 librement posé sur l'autre rail 7₂ comporte une mire 22 amovible, pouvant être positionnée sur le coté de la règle support 13, soit ici en arrière du plan de la figure, et destinée à venir en contact verticalement contre l'intérieur de cet autre rail 7₂, lequel système comportant au moins un deuxième télémètre 24 a visée latérale 23 vers cette mire 22.

Suivant le mode de réalisation représenté sur la figure 3, le boîtier 20 de cette station de mesure est fixé à, soit ici au dessus, d'un support mobile 29 muni de roues 28 aptes à se déplacer sur les rails 7, lequel système comportant alors au moins deux télémètres 24₁,24₂ à visée latérale 23₁,23₂ chacune vers un rail 7₁,7₂, et disposés, dans un deuxième boitier, sous la plateforme du support mobile 29 pour bien dégager la visée des télémètres ; ce deuxième boitier pouvant comporter le premier inclinomètre 16₁, ou un troisième inclinomètre en option si le premier est dans le boitier 20, permettant de mesurer l'inclinaison « α » du support 29 par rapport à l'horizontale 14.

Dans les deux modes de réalisation le dit système avec son support 13,29 et l'ensemble des moyens de mesure forme un matériel intégré et transportable, et d'un gabarit extérieur au plus égal à celui des engins roulants normalement sur la voie ferrée 11.

En plus de la hauteur « H » du fil 1 par rapport au rail 7, le microprocesseur 27 du système ou un ordinateur extérieur 25, relié à l'ensemble des moyens de mesure, peut calculer et, cela automatiquement par un logiciel simple que peut écrire l'homme du métier et enregistré dans le microprocesseur 27 ou l'ordinateur 25, est apte à calculer à partir des mesures fournies par les moyens de mesure le désaxement « e » du fil 1 de contact par rapport au plan médian XX' desdits rails 7, l'écartement intérieur D des rails 7 et l'angle « α » de dévers de la voie.

Un tel système permet la mise en oeuvre d'un procédé de mesure de la position du fil de contact 1 de la caténaire 5,6 par rapport à la voie ferrée 11 tel que :
- on affiche l'image fournie par la caméra 19, pointée vers le haut depuis la plateforme 13,29 disposée sur la voie 11 et dans la même direction que l'axe médian vertical XX' de celle- ci, sur l'écran 25 et on clique sur le fil 1 de contact visualisé à l'écran
- on déplace la visée 21 du télémètre laser 17 vertical, disposé dans le plan médian YY' de la plateforme 13,29, par rotation motorisée de celui-ci autour d'un pivot support, vers et jusqu'à la position du point correspondant que l'on a cliqué sur l'écran
- on mesure la distance du fil 1 de contact avec le dit télémètre 17, et on calcule l'angle « β » de celui-ci avec la verticale par soustraction des valeurs relevées par le premier inclinomètre 16₁ de mesure de l'horizontalité et le deuxième inclinomètre 16₂ de mesure de la rotation du télémètre 17
- on en déduit, par les calculs déjà évoqués précédemment, la hauteur « H »du fil 1 par rapport au plan P de la voie, le désaxement « e » du fil 1 de contact par rapport au plan médian vertical XX') de celle-ci et son angle « α » de dévers par rapport à l'horizontale.

De plus suivant le mode de réalisation de la figure 2:
- on dispose une mire 22 verticalement et contre l'intérieur d'un des rails 7₂ et on mesure sa distance avec un deuxième télémètre 24 positionné à une distance connue de l'autre rail 7₁, à visée latérale 23 et solidaire de la plate-forme 13 support de l'ensemble des moyens de mesure, ladite plate-forme étant déplaçable d'un point de mesure à un autre et en appui sur le dessus des deux rails 7₁,7₂
- on en déduit, par les calculs déjà évoqués précédemment, les valeurs de l'écartement intérieur « D » des rails 7₁,7₂ et de l'écart de position des plans médians verticaux YY' de la plate-forme et XX' de la voie et on corrige en conséquence et éventuellement les valeurs de hauteur « H » et de désaxement « e » du fil 1 de contact,

Et suivant le mode de réalisation de la figure 3:
- on dispose sur la plateforme 29, support de l'ensemble des moyens de mesure, deux télémètres 24₁,24₂ à visée latérale 23₁,23₂ chacune vers un rail 7₁,7₂ et suivant une inclinaison connue par rapport au plan de la plate-forme, laquelle plateforme 29 est mobile munie de roues 28 aptes à se déplacer sur les rails 7,
- on mesure la distance de chacun des rails 7 avec le télémètre 24 qui le vise et on en déduit, par les calculs déjà évoqués précédemment, les valeurs de l'écartement intérieur « D » des rails 7₁,7₂ et de l'écart de position des plans médians verticaux YY' de la plate-forme et XX' de la voie 11 et on corrige en conséquence et éventuellement les valeurs de hauteur « H » et de désaxement « e » du fil de contact 1.

## Revendications

1. Système de mesure de la position du fil de contact (1) d'une caténaire (5,6) d'alimentation électrique par rapport à une voie ferrée (11), comportant un premier moyen de mesures intégrant un télémètre vertical (17) apte à mesurer la hauteur (H) du fil (1) de contact par rapport aux rails (7) de la voie ferrée et des seconds moyens de mesures aptes à permettre la mesure du désaxement (e) du fil de contact par rapport au plan médian (XX') vertical desdits rails (7), et comportant un inclinomètre (16₂) solidaire du télémètre laser (17), monté sur un pivot d'inclinaison latérale, et apte à mesurer l'angle du faisceau de celui-ci quand il vise le fil (1) de contact, l'ensemble de ces moyens de mesure étant disposés sur un support (13,29) posé sur les rails (7) **caractérisé en ce que** le système comporte en outre au moins un autre inclinomètre (16₁) permettant de mesurer l'inclinaison « α » du support du système par rapport à l'horizontale (14), et une caméra (19) pointée vers le haut dans la même direction de l'axe (XX') de la voie et apte à capter l'image du fil de contact (1) et le pivot d'inclinaison du télémètre laser (17) est motorisé.

2. Système de mesure suivant la revendications 1 **caractérisé en ce que** l'ensemble des moyens de mesures du système sont intégrés dans une station de mesure (20) dont le boîtier est fixé à un support (13) apte à être posé sur le dessus des rails (7) et calé sur un de ses côtés contre l'intérieur d'un de ces rails (7₁), l'autre côté étant librement posé sur l'autre rail (7₂), et comportant une mire (22) amovible destinée à venir en contact verticalement contre l'intérieur de cet autre rail (7₂), lequel système comportant au moins un deuxième télémètre (24) a visée latérale (23) vers cette mire (22).

3. Système de mesures suivant la revendication 1 **caractérisé en ce que** l'ensemble des moyens de mesures du système sont intégrés dans une station de mesure (20) dont le boîtier est fixé à un support mobile (29) muni de roues (28) aptes à se déplacer sur les rails (7), lequel système comportant au moins deux télémètres (24₁,24₂) à visée latérale (23₁,23₂) chacune vers un rail (7₁,7₂).

4. Système de mesure suivant l'une quelconque des revendications 2 et 3 **caractérisé en ce que** le dit système avec son support (13,29) et l'ensemble des moyens de mesure forme un matériel intégré et transportable, et d'un gabarit extérieur au plus égal à celui des engins roulants normalement sur la voie ferrée.

5. Système de mesure suivant l'une quelconque des revendications 1 à 4 **caractérisé en ce qu'**il comporte un microprocesseur (27) relié à l'ensemble des moyens de mesure et apte à calculer à partir des mesures fournies par ceux-ci au moins la hauteur (H) du fil (1) par rapport au rail (7), le désaxement (e) du fil (1) de contact par rapport au plan médian (XX') desdits rails (7) et l'angle (α) de dévers de la voie.

6. Système de mesure suivant l'une quelconque des revendications 2 ou 3, et la revendication 5, **caractérisé en ce que** le microprocesseur (27) est apte à calculer l'écartement intérieur (D) des rails (7₁,7₂).

7. Système de mesure suivant l'une quelconque des revendications 1 à 6 **caractérisé en ce qu'**il comporte un éclairage (18) orienté vers le haut pour couvrir le champ de vision (19') de la caméra (19).

8. Procédé de mesure de la position du fil de contact (1) d'une caténaire (5,6) d'alimentation électrique par rapport à une voie ferrée (11) comportant deux rails (7) situés sous la dite caténaire **caractérisé en ce que** :
- on affiche l'image fournie par une caméra (19), pointée vers le haut depuis une plateforme (13,29) disposée sur la voie (11) et dans la même direction que l'axe médian vertical (XX') de celle- ci, sur un écran (25) et on clique sur le fil (1) de contact visualisé à l'écran
- on déplace la visée (21) d'un télémètre laser (17) vertical, disposé dans le plan médian (YY') de la même plateforme (13,29), par rotation motorisée de celui-ci autour d'un pivot support, dans un plan perpendiculaire au dit plan médian (YY') vers et jusqu'à la position du point correspondant que l'on a cliqué sur l'écran
- on mesure la distance du fil (1) de contact avec le dit télémètre (17), et on calcule l'angle (β) de celui-ci avec la verticale par soustraction des valeurs relevées par un premier inclinomètre (16₁) de mesure de l'horizontalité et un deuxième inclinomètre (16₂) de mesure de la rotation du télémètre (17)
- on en déduit la hauteur (H) du fil (1) par rapport au plan (P) de la voie, le désaxement (e) du fil (1) de contact par rapport au plan médian vertical (XX') de celle-ci et son angle (α) de dévers par rapport à l'horizontale

9. Procédé de mesure suivant la revendication 8 **caractérisé en ce que** :
- on dispose une mire (22) verticalement et contre l'intérieur d'un des rails (7₂) et on mesure sa distance avec un deuxième télémètre (24) à visée latérale (23) et solidaire de la plate-forme (13) support de l'ensemble des moyens de mesure, ladite plate-forme étant déplaçable d'un point de mesure à un autre, positionnée à une distance connue de l'autre rail (7₁) et en appui sur les deux rails (7₁,7₂)
- on en déduit la valeur de l'écartement intérieur (D) des rails (7₁,7₂) et de l'écart de position des plans médians verticaux (YY') de la plate-forme et (XX') de la voie et on corrige en conséquence et éventuellement les valeurs de hauteur (H) et de désaxement (e) du fil (1),

10. Procédé de mesure suivant la revendication 8 **caractérisé en ce que** :
- on dispose sur la plateforme (29), support de l'ensemble des moyens de mesure, deux télémètres (24₁,24₂) à visée latérale (23₁,23₂) chacune vers un rail (7₁,7₂) et suivant une inclinaison connue par rapport au plan de la plate-forme, laquelle plateforme (29) est mobile munie de roues (28) aptes à se déplacer sur les rails (7),
- on mesure la distance de chacun des rails (7) avec le télémètre (24) qui le vise et on en déduit la valeur de l'écartement intérieur (D) des rails (7₁,7₂) et de l'écart de position des plans médians verticaux (YY') de la plate-forme et (XX') de la voie, et on corrige en conséquence et éventuellement les valeurs de hauteur (H) et de désaxement (e) du fil de contact (1).

## Patentansprüche

1. System zur Messung der Position des Kontaktdrahtes (1) einer Overhead-Stromleitung (5, 6) im Verhältnis zu einem Gleis (11), umfassend ein erstes Messmittel, welches ein vertikales Telemeter (17) integriert, das geeignet ist, die Höhe (H) des Kontaktdrahtes (1) im Verhältnis zu den Schienen (7) des Gleises zu messen, und zweite Messmittel, die geeignet sind, die Messung des Versatzes (e) des Kontaktdrahtes im Verhältnis zur vertikalen Mittenebene (XX') der Schienen (7) zu ermöglichen, und umfassend ein Inklinometer (16₂) einstückig mit dem Laser-Telemeter (17), das auf einem lateralen Neigungsschwenkzapfen montiert und geeignet ist, den Winkel des Strahls desselben zu messen, wenn er auf den Kontaktdraht (1) gerichtet ist, wobei die Gesamtheit dieser Messmittel auf einem Träger (13, 29) angeordnet ist, der auf den Schienen (7) positioniert ist, **dadurch gekennzeichnet, dass** das System außerdem mindestens ein weiteres Inklinometer (16₁) umfasst, das die Messung der Neigung "α" des Trägers des Systems im Verhältnis zur Horizontalen (14) ermöglicht, und eine Kamera (19), die nach oben in die gleiche Richtung zeigt wie die Achse (XX') des Gleises und geeignet ist, das Bild des Kontaktdrahtes (1) aufzunehmen, und der Neigungsschwenkzapfen des Laser-Telemeters (17) motorisiert ist.

2. Messsystem nach Anspruch 1, **dadurch gekennzeichnet, dass** die Gesamtheit der Messmittel des Systems in einer Messstation (20) integriert ist, deren Gehäuse an einem Träger (13) befestigt ist, der geeignet ist, auf der Oberseite der Schienen (7) positioniert und an einer seiner Seiten gegen das Innere einer dieser Schienen (7₁) verkeilt zu werden, wobei die andere Seite frei auf der anderen Schiene (7₂) positioniert wird, und umfassend eine abnehmbare Messlatte (22), die dazu bestimmt ist, vertikal mit dem Inneren dieser anderen Schiene (7₂) in Kontakt zu gelangen, wobei das System mindestens ein zweites Telemeter (24) mit einer lateralen Visur (23) in Richtung dieser Messlatte (22) umfasst.

3. Messsystem nach Anspruch 1, **dadurch gekennzeichnet, dass** die Gesamtheit der Messmittel des Systems in einer Messstation (20) integriert ist, deren Gehäuse an einem beweglichen Träger (29) befestigt ist, der mit Rädern (28) versehen ist, die geeignet sind, sich auf den Schienen (7) zu verschieben, wobei das System mindestens zwei Telemeter (24₁, 24₂) umfasst mit einer lateralen Visur (23₁, 23₂) jeweils in Richtung einer Schiene (7₁, 7₂).

4. Messsystem nach einem der Ansprüche 2 und 3, **dadurch gekennzeichnet, dass** das System mit seinem Träger (13, 29) und die Gesamtheit der Messmittel ein integriertes und transportables Material bilden, und mit einer äußeren Größe, die höchstens gleich jener von Maschinen ist, die normalerweise auf dem Gleis fahren.

5. Messsystem nach einem der Ansprüche 1 bis 4, **dadurch gekennzeichnet, dass** dieses einen Mikroprozessor (27) umfasst, der mit der Gesamtheit der Messmittel verbunden und geeignet ist, aus den Messungen, die von diesen geliefert werden, mindestens die Höhe (H) des Drahtes (1) im Verhältnis zur Schiene (7), den Versatz (e) des Kontaktdrahtes (1) im Verhältnis zur Mittenebene (XX') der Schienen (7) und den Überhöhungswinkel (α) des Gleises zu berechnen.

6. Messsystem nach einem der Ansprüche 2 oder 3, und Anspruch 5, **dadurch gekennzeichnet, dass** der Mikroprozessor (27) geeignet ist, den Innenabstand (D) der Schienen (7₁, 7₂) zu berechnen.

7. Messsystem nach einem der Ansprüche 1 bis 6, **dadurch gekennzeichnet, dass** dieses eine Beleuchtung (18) umfasst, die nach oben gerichtet ist, um das Sichtfeld (19') der Kamera (19) abzudecken.

8. Verfahren zur Messung der Position des Kontaktdrahtes (1) einer Overhead-Stromleitung (5, 6) im Verhältnis zu einem Gleis (11), das zwei Schienen (7) umfasst, die unter der Overhead-Leitung angeordnet sind, **dadurch gekennzeichnet, dass**:
- das Bild, das von einer Kamera (19) geliefert wird, welche von einer Plattform (13, 29), die auf dem Gleis (11) angeordnet ist, nach oben und in dieselbe Richtung zeigt wie die vertikale Mittenachse (XX') desselben, auf einem Bildschirm (25) abgebildet wird und der Kontaktdraht (1), der auf dem Bildschirm visualisiert wird, angeklickt wird,
- die Visur (21) eines vertikalen Laser-Telemeters (17), das in der Mittenebene (YY') derselben Plattform (13, 29) angeordnet ist, durch eine motorisierte Drehung desselben rund um einen Schwenkträger in einer Ebene rechtwinklig zur Mittenebene (YY') in Richtung und bis zur Position des Punkts verschoben wird, der am Bildschirm angeklickt wurde,
- die Distanz des Kontaktdrahtes (1) mit dem Telemeter (17) gemessen wird, und der Winkel (β) desselben mit der Vertikalen durch Subtraktion der Werte berechnet wird, die von einem ersten Inklinometer (16₁) zur Messung der Horizontalität und einem zweiten Inklinometer (16₂) zur Messung der Drehung des Telemeters (17) angezeigt werden,
- daraus die Höhe (H) des Drahtes (1) im Verhältnis zur Ebene (P) des Gleises, der Versatz (e) des Kontaktdrahtes (1) im Verhältnis zur vertikalen Mittenebene (XX') desselben und sein Böschungswinkel (α) im Verhältnis zur Horizontalen abgeleitet werden.

9. Messverfahren nach Anspruch 8, **dadurch gekennzeichnet, dass**:
- eine Messlatte (22) vertikal und gegen das Innere einer der Schienen (7₂) angeordnet wird und ihre Distanz mit einem zweiten Telemeter (24) mit einer lateralen Visur (23) und einstückig mit der Plattform (13) als Träger der Gesamtheit der Messmittel gemessen wird, wobei die Plattform von einem Messpunkt zu einem anderen verschiebbar ist, positioniert in einer bekannten Distanz von der anderen Schiene (7₁) und angebracht auf den beiden Schienen (7₁, 7₂),
- daraus der Wert des Innenabstands (D) der Schienen (7₁, 7₂) und des Abstands der Position der vertikalen Mittenebenen (YY') der Plattform und (XX') des Gleises abgeleitet wird, und dementsprechend und gegebenenfalls die Werte der Höhe (H) und des Versatzes (e) des Drahtes (1) korrigiert werden.

10. Messverfahren nach Anspruch 8, **dadurch gekennzeichnet, dass**:
- auf der Plattform (29), als Träger der Gesamtheit der Messmittel, zwei Telemeter (24₁, 24₂) mit lateraler Visur (23₁, 23₂) jeweils in Richtung einer Schiene (7₁, 7₂) und gemäß einer bekannten Neigung im Verhältnis zur Ebene der Plattform angeordnet werden, wobei die Plattform (29) beweglich mit Rädern (28) versehen ist, die geeignet sind, sich auf den Schienen (7) zu verschieben,
- die Distanz jeder Schiene (7) mit dem Telemeter (24) gemessen wird, das auf diese gerichtet ist, und daraus der Wert des Innenabstands (D) der Schienen (7₁, 7₂) und des Abstands der Position der vertikalen Mittenebenen (YY') der Plattform und (XX') des Gleises abgeleitet wird, und dementsprechend und gegebenenfalls die Werte der Höhe (H) und des Versatzes (e) des Kontaktdrahtes (1) korrigiert werden.

## Claims

1. System for measuring the position of the contact wire (1) of an overhead electrical power line (5, 6) relative to a railway track (11), comprising a first measurement means incorporating a vertical distance meter (17) suitable for measuring the height (H) of the contact wire (1) relative to the rails (7) of the railway track and second measurement means suitable for making possible to measure the offset (e) of the contact wire relative to the vertical median plane (XX') of said rails (7), and comprising an inclinometer (16₂) secured to the laser distance meter (17), mounted on a lateral tilt pivot, and suitable for measuring the angle of the laser distance meter beam when it targets the contact wire (1), all of these measurement means being arranged on a support (13, 29) placed on the rails (7), **characterized in that** the system further comprises at least one other inclinometer (16₁) making possible to measure the tilt (α) of the support of the system relative to the horizontal (14), and a movie camera (19) pointed upwards in the same direction of the axis (XX') of the railway track and suitable for capturing the image of the contact wire (1) and the tilt pivot of the laser distance meter (17) is motorized.

2. Measurement system according to Claim 1, **characterized in that** all of the measurement means of the system are incorporated in a measurement station (20), the housing of which is fixed to a support (13) suitable for being placed onto the top of the rails (7) and pushed on one of its sides against the inside of one of these rails (7₁), the other side being freely placed on the other rail (7₂), and comprising a removable reflecting target (22) intended to come into contact vertically against the inside of this other rail (7₂), said system comprising at least one second laser distance meter (24) aimed laterally (23) towards this reflecting target (22).

3. Measurement system according to Claim 1, **characterized in that** all of the measurement means of the system are incorporated in a measurement station (20), the housing of which is fixed to a mobile support (29) provided with wheels (28) suitable for being moved on the rails (7), said system comprising at least two laser distance meters (24₁, 24₂) aimed laterally (23₁, 23₂) each towards a rail (7₁, 7₂).

4. Measurement system according to either one of Claims 2 and 3, **characterized in that** said system with its support (13, 29) and all of the measurement means form an equipment item that is integrated and transportable, and with an outer gauge at most equal to that of the machine rolling normally on the railway track.

5. Measurement system according to any one of Claims 1 to 4, **characterized in that** it comprises a microprocessor (27) linked to all the measurement means and suitable for computing, from the measurements supplied thereby, at least the height (H) of the wire (1) relative to the rail (7), the offset (e) of the contact wire (1) relative to the median plane (XX') of said rails (7) and the cant's angle (α) of the track.

6. Measurement system according to any one of Claims 2 or 3 and Claim 5, **characterized in that** the microprocessor (27) is suitable for computing the interior spacing (D) of the rails (7₁, 7₂).

7. Measurement system according to any one of Claims 1 to 6, **characterized in that** it comprises a light (18) oriented upwards to cover the field of view (19') of the movie camera (19).

8. Measurement method for measuring the position of the contact wire (1) of an overhead electrical power line (5, 6) relative to a railway track (11) comprising two rails (7) situated under said overhead line, **characterized in that**:
- the image supplied by a movie camera (19) pointed upwards on a platform (13, 29) arranged on the track (11) and in the same direction as the vertical median axis (XX') thereof, is displayed on a screen (25), and the contact wire (1) displayed on the screen is clicked on
- the aim (21) of a vertical laser distance meter (17), arranged in the median plane (YY') of the same platform (13, 29), is moved by motorized rotation thereof about a support pivot, in a plane at right angles to said median plane (YY') towards and to the position of the corresponding point that was clicked on on the screen
- the distance to the contact wire (1) is measured with said laser distance meter (17), and the angle (β) thereof with the vertical is computed by the subtraction of the values recorded by a first inclinometer (16₁) for measuring the horizontality and a second inclinometer (16₂) for measuring the rotation of the distance meter (17)
- the height (H) of the wire (1) relative to the plane (P) of the track, the offset (e) of the contact wire (1) relative to the vertical median plane (XX') thereof and its cant's angle (α) relative to the horizontal are deduced therefrom.

9. Measurement method according to Claim 8, **characterized in that**:
- a reflecting target (22) is arranged vertically and pushed against the inside of one of the rails (7₂) and its distance is measured with a second laser distance meter (24) aimed laterally (23) and secured to the platform (13) supporting all of the measurement means, said platform being able to be moved from one measurement point to another, positioned at a known distance from the other rail (7₁) and bearing on both rails (7₁, 7₂)
- the value of the interior spacing (D) of the rails (7₁, 7₂) and of the difference in position of the vertical median planes (YY') of the platform and (XX') of the track are deduced therefrom and the values of the height (H) and of the offset (e) of the wire (1) are corrected accordingly and if necessary.

10. Measurement method according to Claim 8, **characterized in that**:
- two laser distance meters (24₁, 24₂) aimed laterally (23₁, 23₂) each towards a rail (7₁, 7₂) and, according to a known tilt relative to the plane of the platform, are arranged on the platform (29) supporting all of the measurement means, said platform (29) being mobile, provided with wheels (28) suitable for moving on the rails (7),
- the distance between each of the rails (7) and the laser distance meter (24), which aims at it, is measured and the value of the interior spacing (D) of the rails (7₁, 7₂) and of the difference in position of the vertical median planes (YY') of the platform and (XX') of the track are deduced therefrom, and the values of the height (H) and of the offset (e) of the contact wire (1) are corrected accordingly and if necessary.
